# EUROPÄISCHE PATENTSCHRIFT

(11) **EP 2 020 176 B1**
(45) Veröffentlichungstag und Bekanntmachung des Hinweises auf die Patenterteilung: **24.10.2012**
(21) Anmeldenummer: 08012750.9
(22) Anmeldetag: 15.07.2008
(51) Int. Cl.: A01D 43/08, A01D 43/07

(54) **Erntemaschine mit Überladeeinrichtung**
Harvesting machine with a transfer device
Moissonneuse dotée d'un dispositif de transbordement

(30) Priorität: 03.08.2007 DE 102007036797
(43) Veröffentlichungstag der Anmeldung: 04.02.2009
(73) Patentinhaber: CLAAS Selbstfahrende Erntemaschinen GmbH, 33426 Harsewinkel (DE)
(72) Erfinder: Haffert, Andreas, Dr., 33334 Gütersloh (DE)
(74) Vertreter: Heuer, Wilhelm

(56) Entgegenhaltungen:
- EP-A- 0 260 334
- DE-A1- 2 400 714
- DE-A1- 3 538 554
- DE-A1- 10 211 706
- DE-U1- 8 400 173
- US-A- 2 022 166
- US-B1- 6 931 771

## Beschreibung

Die vorliegende Erfindung betrifft eine selbst fahrende Erntemaschine mit einer Überladeeinrichtung zum Überladen von Erntegut aus der Erntemaschine in ein der Erntemaschine benachbartes Transportfahrzeug. Eine solche Überladeeinrichtung umfasst im Allgemeinen einen so genannten Auswurfkrümmer, der die Bordwand eines Transportfahrzeugs überbrückend platzierbar ist, um das Erntegut in einen nach oben offenen Laderaum des Transportfahrzeugs einzufüllen.

Bei einer Erntemaschine ohne einen eigenen Zwischenspeicher für das Erntegut, insbesondere bei einem Feldhäcksler, ergibt sich das Problem, dass wenn das Transportfahrzeug voll ist, die Erntemaschine anhalten muss, um den Strom des Ernteguts aus dem Auswurfkrümmer zu unterbrechen, ein neues Transportfahrzeug den Platz des alten einnehmen muss und anschließend die Erntemaschine und das neue Transportfahrzeug sich synchron wieder in Bewegung setzen müssen. Jede dadurch bedingte Unterbrechung des Erntebetriebs beeinträchtigt dessen Wirtschaftlichkeit. Außerdem ist ein hohes Maß an Aufmerksamkeit seitens des Fahrers der Erntemaschine oder Kommunikation zwischen ihm und den Fahrern der Transportfahrzeuge erforderlich, um während eines Wechsels der Transportfahrzeuge Erntegutverluste zu vermeiden.

Aus DE 102 11 706 A1 ist eine Erntemaschine nach dem Oberbegriff des Anspruchs 1 bekannt, bei der der Auswurfkrümmer zwei während des Betriebs der Erntemaschine gegeneinander verschiebbare Elemente aufweist, durch die die Länge des Auswurfkrümmers veränderbar ist. Dieser Auswurfkrümmer erlaubt es, wenn Erntemaschine und Transportfahrzeug mit gleicher Geschwindigkeit und ideal parallel nebeneinander herfahren, den Ort, an dem das Erntegut auf der Ladefläche des Transportfahrzeugs auftrifft, zu variieren und so eine gleichmäßige Verteilung des Ernteguts auf der Ladefläche und eine gute Ausnutzung des verfügbaren Ladevolumens zu erreichen. Um Erntegutverluste bei einem Wechsel der Transportfahrzeuge zu vermeiden, muss auch hier die Ausgabe des Ernteguts aus dem Auswurfkrümmer zeitweilig unterbrochen werden.

Eine weitere Erntemaschine nach dem Oberbegriff des Anspruchs 1 ist in DE 84 00 173 U1 beschrieben. Die Erntemaschine weist ein stationäres Verlängerungsstück auf, und ihr beweglicher Auswurfkrümmer ist in einer Stellung platzierbar, in der sein freies Ende an das Verlängerungsstück anschließt.

DE 2 400 714 offenbart einen Auswurfkrümmer, der aus mehreren gelenkig verbundenen Segmenten zusammengesetzt ist, um für den Straßentransport eine kompakte zusammengeklappte Konfiguration annehmen zu können. Eine Ausgabe von Erntegut ist in der zusammengeklappten Konfiguration nicht möglich.

DE-GM 8 400 173 lehrt eine Schlepper-Feldhäcksler-Einheit, bei der ein Auswurfkrümmer an einen gegen eine Längsmittelebene des Schleppers versetzten Auslassstutzen des Feldhäckslers angeschlossen ist. Der Auswurfkrümmer ist zwischen einer Stellung, in der er ein Transportfahrzeug auf der dem Auslassstutzen benachbarten Seite des Schleppers direkt befüllt, und einer Stellung schwenkbar, in der er ein Fahrzeug auf der gegenüberliegenden Seite des Schleppers über einen an dem Schlepper fest montierten, an den Auslasskrümmer ankoppelbaren Leitungsabschnitt befüllt. Auch hier ist ein Umschalten des Erntegutstroms von einem Transportfahrzeug auf ein anderes ohne Anhalten des Schleppers nur mit Erntegutverlusten möglich.

Aufgabe der vorliegenden Erfindung ist daher, eine Erntemaschine anzugeben, die einen Wechsel zwischen Transportfahrzeugen ohne eine Unterbrechung des Erntebetriebs und im wesentlichen ohne Erntegutverluste ermöglicht.

Die Aufgabe wird gelöst, indem bei einer Erntemaschine mit einem Maschinengehäuse und einem an dem Maschinengehäuse beweglich montierten Auswurfkrümmer, an dem eine erste Abgabestelle für Erntegut gebildet ist, eine zweite Abgabestelle an dem Auswurfkrümmer sowie Mittel zum Umschalten eines Erntegutstroms von einer der Abgabestellen zur anderen vorgesehen werden.

Um ein gezieltes Abwerfen des Ernteguts auf die Ladefläche eines Transportfahrzeugs zu ermöglichen, ist zweckmäßigerweise an jeder Abgabestelle eine Umlenkeinrichtung zum Ablenken eines die Abgabestelle passierenden Erntegutstroms nach unten angeordnet. Diese Umlenkeinrichtung kann je nach Ausgestaltung der Erfindung dauerhaft wirksam sein oder in eine Stellung verschiebbar sein, in der sie einen Durchgang des Ernteguts ohne Ablenkung ermöglicht.

Einer ersten Ausgestaltung der Erfindung zufolge sind in dem Auswurfkrümmer zwei benachbarte Leitungen gebildet, von denen eine auf die erste Abgabestelle und die andere auf die zweite Abgabestelle mündet. Um den Erntegutstrom von einer Leitung auf die andere zu verlagern, kann der Auswurfkrümmer an dem Maschinengehäuse zwischen einer Stellung, in der ein Auslass des Maschinengehäuses auf die eine Leitung mündet, und einer Stellung, in der er auf die andere Leitung mündet, verstellbar sein.

Eine Verteilerklappe zum wahlweisen Beaufschlagen der einen oder anderen Abgabestelle mit dem Erntegutstrom kann auch innerhalb des Auswurfkrümmers vorgesehen sein.

Einer bevorzugten Weiterbildung zufolge ist die zweite Abgabestelle zwischen einem proximalen und einem distalen Abschnitt des Auswurfkrümmers angeordnet, und die Umlenkeinrichtung der zweiten Abgabestelle ist zwischen einer Stellung, in der sie den Erntegutstrom nach unten ablenkt, und einer Stellung, in der sie ihn in den distalen Abschnitt durchlässt, beweglich. Der proximale Abschnitt des Auswurfkrümmers kann somit zur Erntegutausgabe sowohl über die erste als auch über die zweite Abgabestelle genutzt werden.

Die Umlenkeinrichtung kann dann insbesondere eine in Höhe der zweite Auswurföffnung von einer Oberseite des Auswurfkrümmers in dessen Inneres hinein schwenkbare Klappe umfassen.

Wenn die zweite Abgabestelle in einer konkav gekrümmten Oberfläche des Auswurfkrümmers gebildet ist, kann auf Mittel zum Verschließen der zweiten Abgabestelle während der Ausgabe des Ernteguts über die erste Abgabestelle verzichtet werden, da das Erntegut aufgrund seiner Massenträgheit im wesentlichen verlustfrei an der zweiten Abgabestelle vorbei in den distalen Abschnitt eintreten kann. Gegebenenfalls kann der Auswurfkrümmer zur Gewichtsreduzierung an seiner konkav gekrümmten Seite zwischen den Ausgabestellen offen sein.

Proximaler und distaler Abschnitt des Auswurfkrümmers sind zweckmäßigerweise schwenkbar verbunden. Die schwenkbare Verbindung kann einerseits eine kompakte Konfiguration des Auswurfkrümmers für das Fahren auf öffentlichen Straßen ermöglichen; sie kann aber auch dazu dienen, die zweite Abgabestelle zur Ausgabe von Erntegut nutzbar zu machen, indem der distale Abschnitt vor ihr wegbewegt wird.

Um eine kompakte Konfiguration des Auswurfkrümmers zu erzielen, ist der distale Abschnitt vorzugsweise schwenkbar zwischen einer Stellung, in der er den proximalen Abschnitt verlängert, und einer Stellung, in der er - insbesondere von oben oder von der Seite - gegen den proximalen Abschnitt zurückgeklappt ist.

Des weiteren können der distale Abschnitt und die Umlenkeinrichtung der zweiten Abgabestelle zweckmäßigerweise so aneinander angepasst sein, dass sie zwischen einer Stellung, in der der distale Abschnitt den proximalen Abschnitt verlängert, und einer Stellung, in der die Umlenkeinrichtung an der zweiten Abgabestelle wirksam ist, bewegbar sind.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine perspektivische Ansicht einer erfindungsgemäßen fahrbaren Erntemaschine mit dem Auswurfkrümmer in einer ersten Arbeitskonfiguration;
- Fig. 2: dieselbe Erntemaschine mit dem Auswurfkrümmer in einer zweiten Arbeitskonfiguration;
- Fig. 3: die Erntemaschine mit dem Auswurfkrümmer in Transportkonfiguration;
- Fig. 4: einen schematischen Teilschnitt durch einen Auswurfkrümmer gemäß einer ersten Ausgestaltung;
- Fig. 5: einen zur Fig. 4 analogen Schnitt gemäß einer zweiten Ausgestaltung;
- Fig. 6: einen zur Fig. 4 analogen Schnitt gemäß einer dritten Ausgestaltung in einer ersten Arbeitskonfiguration;
- Fig. 7: den Auswurfkrümmer der dritten Ausgestaltung in einer zweiten Arbeitskonfiguration;
- Fig. 8: eine Seitenansicht eines Auswurfkrümmers gemäß einer vierten Ausgestaltung in einer ersten Arbeitskonfiguration;
- Fig. 9: den Auswurfkrümmer der Fig. 8 in einer zweiten Arbeitskonfiguration;
- Fig. 10: eine schematische Seitenansicht eines Auswurfkrümmers gemäß einer fünften Ausgestaltung;
- Fig. 11: eine Abwandlung des Auswurfkrümmers der Fig. 10;
- Fig. 12: eine Draufsicht auf einen Auswurfkrümmer gemäß einer sechsten Ausgestaltung in einer ersten Arbeitskonfiguration; und
- Fig. 13: eine Draufsicht auf den Auswurfkrümmer der Fig. 12 in Transportkonfiguration.

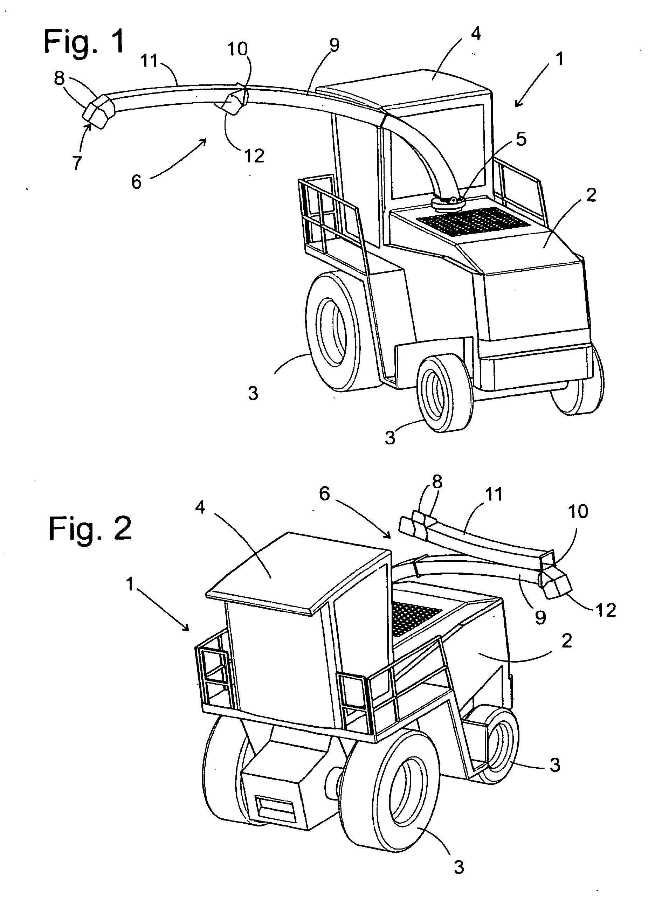

Fig. 1 zeigt einen erfindungsgemäßen Feldhäcksler 1 in perspektivischer Ansicht schräg von hinten. Ein Maschinengehäuse 2 des Feldhäckslers 1 enthält einen Motor zum Antreiben der Räder 3 sowie eines in der Fig. nicht dargestellten, an einer Vorderseite des Feldhäckslers 1 montierbaren Erntevorsatzes. Mit Hilfe des Erntevorsatzes vom Boden aufgenommenes Erntegut wird in einer in der Fig. nicht sichtbaren, im Innern des Maschinengehäuses 2 unterhalb einer Fahrerkabine 4 angeordneten Häckseltrommel zerkleinert und in einen hinter der Fahrerkabine 4 aufsteigenden Auswurfschacht ausgegeben. Ein ebenfalls an dem Auswurfschacht im Innern des Gehäuses 2 angeordneter Nachbeschleuniger 23 schleudert das gehäckselte Erntegut durch einen auf einem Drehkranz 5 an der Oberseite des Maschinengehäuses 2 um eine vertikale Achse drehbar montierten Auswurfkrümmer 6.

Der Auswurfkrümmer 6 hat in herkömmlicher Weise an seinem freien Ende eine Abgabestelle 7 mit einer Umlenkeinrichtung in Form einer Auswurfklappe mit zwei gelenkig miteinander und mit dem Ende des Auswurfkrümmers 6 verbundenen, U-förmig gebogenen Leitblechen 8. Die Leitbleche 8 sind mit Hilfe von nicht dargestellten Stellgliedern schwenkbar, um die Abgaberichtung des Ernteguts zu steuern. In der in Fig. 1 gezeigten Stellung lenken die Leitbleche 8 einen am Ende des Auswurfkrümmers 6 in im wesentlichen horizontaler Richtung austretenden Erntegutstrom steil nach unten um, so dass dieser in etwa unterhalb der Abgabestelle 7 auf eine Ladefläche eines (nicht dargestellten) Transportfahrzeugs trifft.

Der Auswurfkrümmer 6 ist gegliedert in einen proximalen Abschnitt 9, der sich vom Drehkranz 5 zu einem Scharnier 10 mit horizontaler Achse erstreckt, und einen distalen Abschnitt 11, der sich von dem Scharnier 10 bis zum freien Ende des Auswurfkrümmers 6 erstreckt. In Höhe des Scharniers 10 befindet sich eine zweite Abgabestelle 12, die ebenfalls mit einer Umlenkeinrichtung zum Umlenken des Erntegutstroms nach unten versehen ist. Diverse Ausgestaltungen einer solchen Umlenkeinrichtung werden an späterer Stelle genauer beschrieben.

Unter beiden Abgabestellen 7, 12 findet jeweils ein Transportfahrzeug Platz. Es kann daher, während der Feldhäcksler 1 fährt, ein leeres Transportfahrzeug unter die jeweils freie Abgabestelle fahren; der Fahrer des Feldhäckslers 1 schaltet dann den Erntegutstrom auf diese Abgabestelle um, und das volle Transportfahrzeug bleibt zurück, während der Feldhäcksler 1 und das neu hinzu gekommene Transportfahrzeug weiterfahren.

Fig. 2 zeigt den Feldhäcksler 1 in einem alternativen Betriebsmodus. Hier ist der distale Abschnitt 11 des Auswurfkrümmers 6 im Scharnier 10 über den proximalen Abschnitt 9 zurückgeschwenkt, so dass Erntegut nur über die zweite Abgabestelle 12 in ein unmittelbar neben dem Feldhäcksler 1 herfahrendes Transportfahrzeug ausgegeben werden kann.

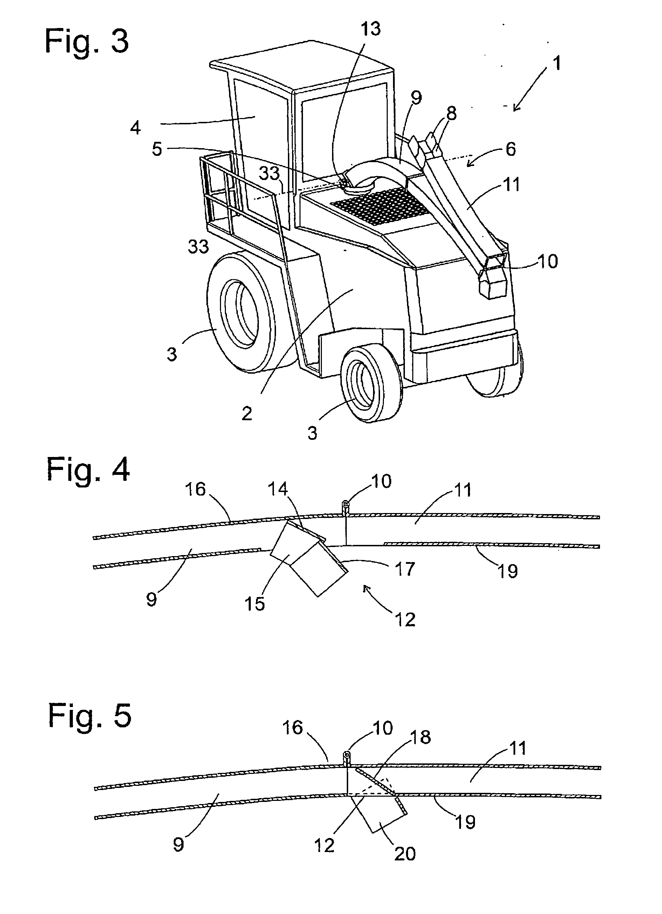

Fig. 3 zeigt den Feldhäcksler 1 in einer Konfiguration zum Fahren auf öffentlichen Verkehrswegen. Auch hier ist der distale Abschnitt 11 auf den proximalen Abschnitt 9 des Auswurfkrümmers 6 zurückgeschwenkt, so dass der Auswurfkrümmer nur wenig über das Maschinengehäuse 2 übersteht, und der gesamte Auswurfkrümmer 6 ist um ein Gelenk 13 in Höhe des Drehkranzes 5 abgesenkt, so dass er nicht nach oben über das Dach der Fahrerkabine 4 hinausreicht.

Fig. 4 zeigt das Scharnier 10 und benachbarte Teile der Abschnitte 9, 11 des Auswurfkrümmers 6 gemäß einer ersten Ausgestaltung. Die Abgabestelle 12 an der konkaven Unterseite des Auswurfkrümmers 6 ist hier als eine auf den proximalen und den distalen Abschnitt 9 beziehungsweise 11 verteilte Öffnung ausgebildet; sie könnte jedoch auch auf nur einen dieser Abschnitte beschränkt sein. Ein erstes U-förmig gebogenes Leitblech 14 ist an die obere Wandung 16 des Auswurfkrümmers 6 schwenkbar angelenkt. Seitliche Schenkel 15 des Leitblechs 14 verlaufen innerhalb des Auswurfkrümmers 6 eng benachbart zu dessen Seitenwänden. Ein zweites, ebenfalls U-förmiges Leitblech 17 ist an das Leitblech 14 in Verlängerung desselben angelenkt. Die Leitbleche 14, 17 bilden eine Umlenkeinrichtung, die in der in Fig. 4 gezeigten Stellung dem Erntegut den Weg in den distalen Abschnitt 11 versperrt und es nach unten, durch die Öffnung der Abgabestelle 12 hindurch, ablenkt.

In einer zweiten, nicht dargestellten Stellung liegen die Leitbleche 14, 17 flach an der oberen Wandung 16 an und geben dem Erntegut den Weg in den distalen Abschnitt 11 und zur Abgabestelle 7 frei. Die Krümmung des Auswurfkrümmers 6 in Höhe der Abgabestelle 12 ist in Abhängigkeit der Fördergeschwindigkeit des Ernteguts im Auswurfkrümmer 6 so gewählt, dass dieses auf einer ballistischen Bahn die Ausgangsöffnung 12 passiert und komplett in den distalen Abschnitt 11 hinein trifft. Daher treten bei Ausgabe des Ernteguts über die Abgabestelle 7 praktisch keine Verluste an der Abgabestelle 12 auf, auch wenn diese nicht verschlossen ist.

Wenn die Krümmung des distalen Abschnitts 11 geeignet an die Geschwindigkeit des Ernteguts im Auswurfkrümmer angepasst ist, d.h. wenn der Verlauf des distalen Abschnitts im Wesentlichen die Wurfparabel des Ernteguts nachbildet, kann eine untere Wand 19 des distalen Abschnitts 11 vollständig entfallen, so dass der Auswurfkrümmer an seiner Unterseite von der Abgabstelle 12 bis zur Abgabestelle 7 offen ist.

Einer in Fig. 5 im Schnitt gezeigten zweiten Ausgestaltung zufolge ist der proximale Abschnitt 9 unterseits auf seiner gesamten Länge geschlossen, und die Abgabestelle 12 ist am stromaufwärtigen Ende des distalen Abschnitts 11 gebildet. Eine Umlenkeinrichtung ist durch eine schwenkbare Klappe 18 gebildet, die an die untere Wandung 19 des Abschnitts 11 angelenkt ist und in der Konfiguration der Fig. 5 die obere Wandung 16 berührt. So blockiert sie den Weg des Ernteguts zur Abgabestelle 7, und das Erntegut wird komplett an der Öffnung 12 durch die Klappe 18 und ein Leitblech 20 nach unten abgelenkt und ausgegeben.

Wenn die Klappe 18 in eine als gestrichelter Umriss dargestellte, mit der unteren Wandung 19 bündige Stellung geschwenkt ist, verschließt sie die Abgabestelle 12, so dass der Erntegutstrom komplett zur Abgabestelle 7 weitergeführt wird.

Ein Umschalten des Erntegutstroms zwischen den Öffnungen 7, 12 ist bei den Ausgestaltungen der Figuren 4 und 5 möglich, ohne den distalen Abschnitt 11 zu bewegen.

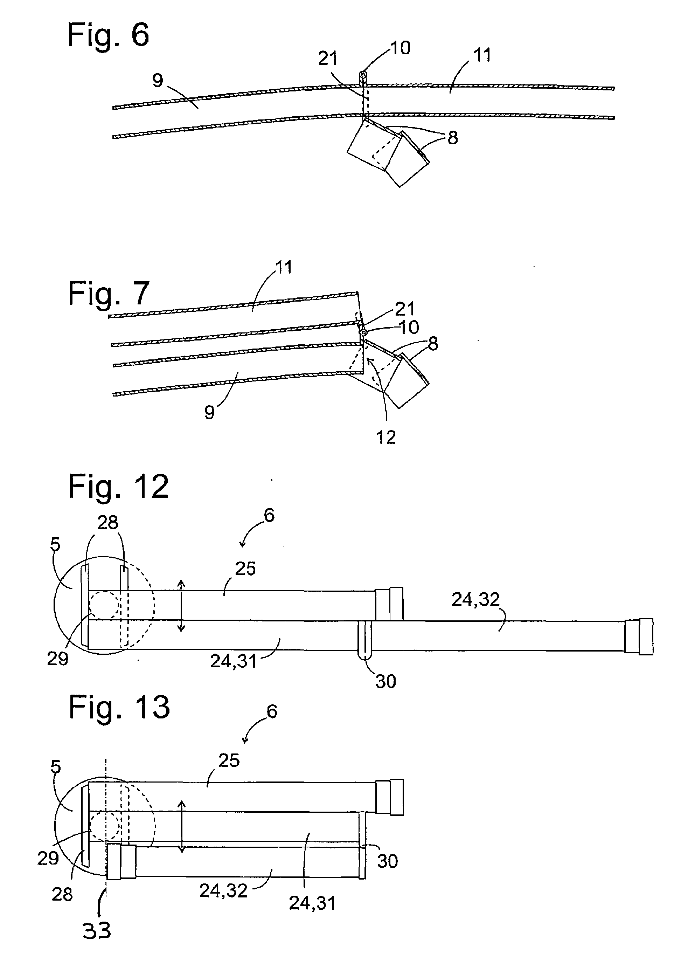

Figuren 6, 7 zeigen jeweils Ansichten einer dritten Ausgestaltung des Auswurfkrümmers 6. In der Konfiguration der Fig. 6 schließen die Abschnitte 9, 11 in Höhe des Scharniers 10 unmittelbar aneinander an, und das Erntegut wird über die Abgabestelle 7 am Ende des distalen Abschnitts 11 ausgegeben. Eine Umlenkeinrichtung, die wie die der Abgabestelle 7 durch zwei U-förmige Leitbleche 8 gebildet ist, ist am Ende des proximalen Abschnitts 9 über Lenker 21 abgehängt. In der Konfiguration der Fig. 6 beeinflusst sie den Erntegutstrom nicht. Wird jedoch der distale Abschnitt 11 im Scharnier 10 hoch- und auf den proximalen Abschnitt 9 zurückgeklappt, wie in Fig. 7 gezeigt, dann werden die Leitbleche 8 von den Lenkern 21 angehoben, so dass sie vor dem nun offen liegenden Ende des proximalen Abschnitts 9 zu liegen kommen. Die Öffnung am Ende des proximalen Abschnitts 9 fungiert somit als die zweite Abgabestelle 12, an der Erntegut von den Leitblechen 8 nach unten abgelenkt wird.

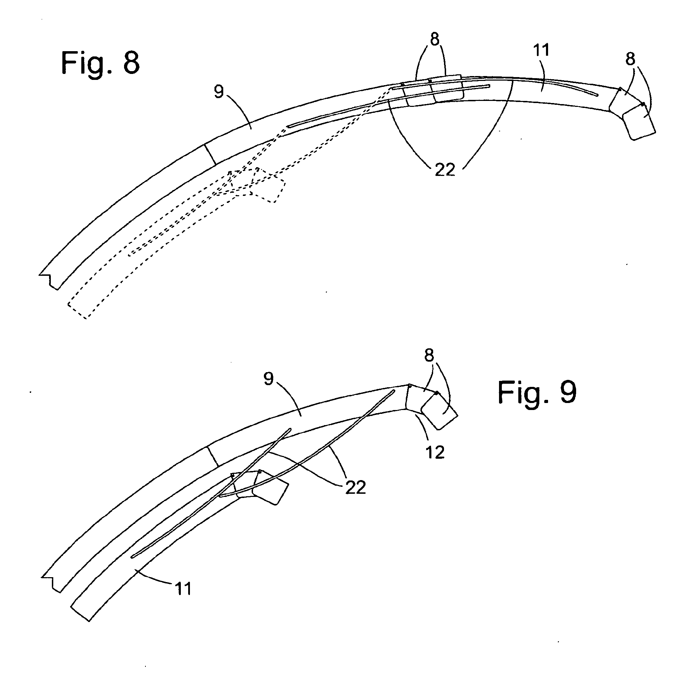

Eine zweite Ausgestaltung, bei der der distale Abschnitt 11 vor dem Ende des proximalen Abschnitts 9 wegbewegt werden muss, um dort die Ausgangsöffnung 12 freizulegen, ist in den Figuren 8 und 9 dargestellt. In Fig. 8 ist der distale Abschnitt 11 durch zwei Lenker 22 vor dem Ende des proximalen Abschnitts 9 in Position gehalten, so dass der Erntegutstrom komplett in den distalen Abschnitt 11 übergeht und von den Leitblechen 8 an dessen freiem Ende nach unten abgelenkt wird. Leitbleche 8 am Ende des proximalen Abschnitts 9 liegen auf dem distalen Abschnitt 11 auf und beeinflussen so den Weg des Ernteguts nicht. Um Erntegut an der zweiten Ausgangsöffnung 12 auszugeben, wird der distale Abschnitt 11 mit Hilfe der Lenker 22 nach unten in Richtung des (in den Figuren nicht gezeigten) Drehkranzes 5 zurückgeschwenkt, so dass wie in Fig. 9 gezeigt nun die Leitbleche 8 am Ende des proximalen Abschnitts 9 herabhängen und den Erntegutstrom nach unten umlenken.

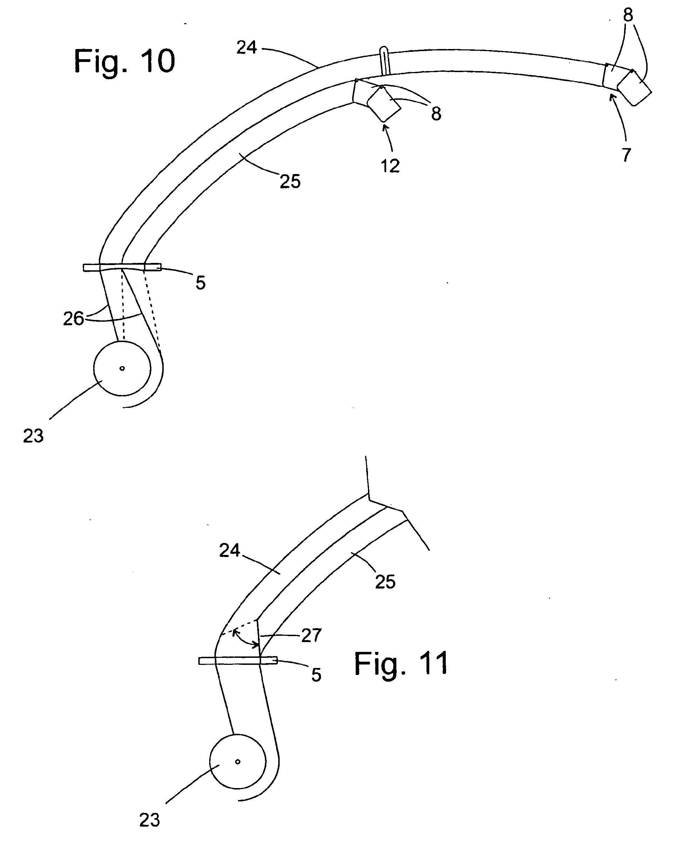

Eine vierte Ausgestaltung des Auswurfkrümmers ist zusammen mit dem Drehkranz 5 und dem bereits erwähnten, hier mit 23 bezeichneten Nachbeschleuniger in Fig. 10 dargestellt. Der Auswurfkrümmer 6 umfasst hier zwei nebeneinander verlaufende Kanäle 24, 25, von denen sich jeweils einer zur Abgabestelle 7 und der andere zur Abgabestelle 12 erstreckt. Beide Abgabestellen sind mit herabhängenden, U-förmig gebogenen Leitblechen 8 versehen. Der Strom aus der zerkleinertem Erntegut und beschleunigender Luft aus dem Nachbeschleuniger 23 ist durch schwenkbare Leitflächen 26 im Innern des Maschinengehäuses 2 zwischen den Kanälen 24 und 25 umschaltbar, um wahlweise jeweils eine der Öffnungen 7, 12 mit Erntegut zu versorgen.

Einer in Fig. 11 dargestellten alternativen Ausgestaltung zufolge umfasst der Auswurfkrümmer 6 wiederum parallele Kanäle 24, 25, doch fehlen innerhalb des Maschinengehäuses 2 verstellbare Leitflächen 26 zum Lenken des Erntegutstroms in einen der beiden Kanäle 24, 25. Statt dessen ist eine schwenkbare Klappe 27 im Auswurfkrümmer 6 nah am Drehkranz angeordnet, um den Weg des Erntegutstroms in jeweils einen der beiden Kanäle 24, 25 zu versperren. Diese Lösung ist im Aufbau einfacher als die der Fig. 10, da die Schwenkachse der Klappe 27 zusammen mit dem Auswurfkrümmer 6 um die Achse des Drehkranzes 5 rotiert.

Die Figuren 12 und 13 zeigen jeweils eine Draufsicht auf einen Auswurfkrümmer 6 gemäß einer weiteren Ausgestaltung der Erfindung. Auch hier umfasst der Auswurfkrümmer zwei nebeneinander verlaufende Kanäle 24, 25, die allerdings seitlich nebeneinander angeordnet sind. Der Auswurfkrümmer 6 ist an dem Drehkranz 5 in Schienen 28 geführt verschiebbar. In der Darstellung der Fig. 12 schließt der Kanal 25 an einen mittigen Durchgang 29 des Drehkranzes 5 an, so dass das Erntegut durch den Durchgang 29 und den Kanal 25 zur Abgabestelle 12 am Ende des letzteren strömt.

Der Auswurfkrümmer 6 ist in den Schienen 28 in eine Stellung verschiebbar, in welcher der Kanal 24 an den Durchgang 29 anschließt und so die Abgabestelle 7 versorgt. Der Kanal 24 ist in einem Scharnier 30 in einen proximalen Abschnitt 31 und einen distalen Abschnitt 32 unterteilt. Der distale Abschnitt 32 ist, wie in Fig. 13 gezeigt, neben den proximalen Abschnitt 31 schwenkbar. Der Auswurfkrümmer ist, wie in Fig. 3 gezeigt, um eine dem Drehkranz 5 benachbarte Achse 33 schwenkend gegen die Oberseite des Maschinengehäuses 2 absenkbar, um die Höhe des Feldhäckslers 1 auf ein für den öffentlichen Straßenverkehr geeignetes Maß zu reduzieren.

### Bezugszeichen

- 1: Feldhäcksler
- 2: Maschinengehäuse
- 3: Räder
- 4: Fahrerkabine
- 5: Drehkranz
- 6: Auswurfkrümmer
- 7: Abgabestelle
- 8: Leitblech
- 9: proximaler Abschnitt
- 10: Scharnier
- 11: distaler Abschnitt
- 12: Abgabestelle
- 13: Gelenk
- 14: Leitblech
- 15: Schenkel
- 16: obere Wandung
- 17: Leitblech
- 18: schwenkbare Klappe
- 19: untere Wandung
- 20: Leitblech
- 21: Lenker
- 22: Lenker
- 23: Nachbeschleuniger
- 24: Kanal
- 25: Kanal
- 26: Leitfläche
- 27: Klappe
- 28: Schiene
- 29: Durchgang
- 30: Scharnier
- 31: proximaler Abschnitt
- 32: distaler Abschnitt
- 33: Achse

## Patentansprüche

1. Erntemaschine (1) mit einem Maschinengehäuse (2) und einem an dem Maschinengehäuse (2) beweglich montierten Auswurfkrümmer (6), an dem eine erste Abgabestelle (7) für Erntegut gebildet ist, **dadurch gekennzeichnet, dass** der Auswurfkrümmer (6) eine zweite Abgabestelle (12) für Erntegut aufweist und dass die Erntemaschine (1) Mittel (14, 17; 18; 21; 22; 26; 28) zum Umschalten eines Erntegutstroms von einer der Abgabestellen (7, 12) zur anderen umfasst.

2. Erntemaschine nach Anspruch 1, **dadurch gekennzeichnet, dass** an jeder Abgabestelle (7, 12) eine Umlenkeinrichtung (8; 14, 17; 18) zum Ablenken eines die Abgabestelle (7; 12) passierenden Erntegutstroms nach unten angeordnet ist.

3. Erntemaschine nach Anspruch 1 oder 2, **dadurch gekennzeichnet, dass** in dem Auswurfkrümmer (6) zwei benachbarte Leitungen (24, 25) gebildet sind, von denen eine (24) auf die erste Abgabestelle (7) und die andere (25) auf die zweite Abgabestelle (12) mündet.

4. Erntemaschine nach Anspruch 3, **dadurch gekennzeichnet, dass** der Auswurfkrümmer (6) zwischen einer Stellung, in der ein Auslass (29) des Maschinengehäuses (2) auf die eine Leitung (24, 25) mündet, und einer Stellung, in der er auf die andere Leitung (25, 24) mündet, verstellbar ist.

5. Erntemaschine nach Anspruch 1 oder 2, **dadurch gekennzeichnet, dass** der Auswurfkrümmer eine Verteilerklappe (27) zum Beaufschlagen der einen oder anderen Abgabestelle (7, 12) mit dem Erntegutstrom aufweist.

6. Erntemaschine nach Anspruch 2, **dadurch gekennzeichnet, dass** die zweite Abgabestelle (12) zwischen einem proximalen (9) und einem distalen Abschnitt (11) des Auswurfkrümmers (6) angeordnet ist und die Umlenkeinrichtung (14, 17; 18) der zweiten Abgabestelle (12) zwischen einer Stellung, in der sie den Erntegutstrom nach unten ablenkt, und einer Stellung, in der sie ihn in den distalen Abschnitt (11) durchlässt, beweglich ist.

7. Erntemaschine nach Anspruch 6, **dadurch gekennzeichnet, dass** die Umlenkeinrichtung eine in Höhe der zweiten Auswurföffnung von einer Oberseite (16) des Auswurfkrümmer in dessen Inneres hineinschwenkbare Klappe (14) umfasst.

8. Erntemaschine nach Anspruch 6 oder 7, **dadurch gekennzeichnet, dass** die zweite Auswurföffnung (12) in einer konkav gekrümmten Oberfläche des Auswurfkrümmers (6) gebildet ist.

9. Erntemaschine nach Anspruch 6, 7 oder 8, **dadurch gekennzeichnet, dass** proximaler und distaler Abschnitt (9,11; 31, 32) des Auswurfkrümmers (6) schwenkbar verbunden sind.

10. Erntemaschine nach Anspruch 9, **dadurch gekennzeichnet, dass** der distale Abschnitt (11; 32) zwischen einer Stellung, in der er den proximalen Abschnitt (9; 31) verlängert, und einer einer Stellung, in der er gegen den proximalen Abschnitt (9; 31) zurückgeklappt ist, schwenkbar ist.

11. Erntemaschine nach einem der Ansprüche 6 bis 10, **dadurch gekennzeichnet, dass** der distale Abschnitt (9) und die Umlenkeinrichtung (8) der zweiten Abgabestelle (12) zwischen einer Stellung, in der der distale Abschnitt (11) den proximalen Abschnitt verlängert, und einer Stellung, in der die Umlenkeinrichtung (8) an der zweiten Abgabestelle (12) wirksam ist, bewegbar sind.

## Claims

1. Harvester (1) having bodywork (2) and a discharge chute (6) which is mounted on the bodywork (2) to be movable and along which a first discharge point (7) for harvested crops is formed, **characterised in that** the discharge chute (6) has a second discharge point (12) for harvested crops, and **in that** the harvester (1) comprises means (14, 17; 18, 21, 22, 26, 28) for switching a flow of harvested crops from one of the discharge points (7, 12) to the other.

2. Harvester according to claim 1, **characterised in that** there is arranged at each discharge point (7, 12) a diverting means (8; 14, 17; 18) to divert downwards a flow of harvested crops passing through the discharge point (7, 12).

3. Harvester according to claim 1 or 2, **characterised in that** two adjoining ducts (24, 25) are formed in the discharge chute (6) of which one (24) opens onto the first discharge point (7) and of which the other (25) opens onto the second discharge point (12).

4. Harvester according to claim 3, **characterised in that** the discharge chute (6) is adjustable between a position in which an outlet (29) from the bodywork (2) opens into one duct (24, 25) and a position in which it opens into the other duct (25, 24).

5. Harvester according to claim 1 or 2, **characterised in that** the discharge chute has a distributing flap (27) to apply the flow of harvested crops to one or the other of said discharge points (7, 12).

6. Harvester according to claim 2, **characterised in that** the second discharge point (12) is arranged between a proximal portion (9) of the discharge chute (6) and a distal portion (11) thereof, and the diverting means (14, 17; 18) at the second discharge point (12) is movable between a position in which it diverts the flow of harvested crops downwards and a position in which it allows the flow to pass through into the distal portion (11).

7. Harvester according to claim 6, **characterised in that** the diverting means comprises a flap (14) which, at the second discharge opening, is pivotable inwards into the interior of the discharge chute from an upper side (16) thereof.

8. Harvester according to claim 6 or 7, **characterised in that** the second discharge opening (12) is formed in a surface of concave curvature of the discharge chute (6).

9. Harvester according to claim 6, 7 or 8, **characterised in that** the proximal and distal portions (9, 11; 31, 32) of the discharge chute (6) are pivotably connected.

10. Harvester according to claim 9, **characterised in that** the distal portion (11, 32) is pivotable between a position in which it lengthens the proximal portion (9, 31) and a position in which it is folded back against the proximal portion (9, 31).

11. Harvester according to one of claims 6 to 10, **characterised in that** the distal portion (9) and the diverting means (8) at the second discharge point (12) are movable between a position in which the distal portion (11) lengthens the proximal portion and a position in which the diverting means (8) at the second discharge point (12) is operative.

## Revendications

1. Moissonneuse (1) ayant une carrosserie (2) et une goulotte d'éjection (6) qui est montée sur la carrosserie (2) pour être mobile et le long de laquelle un premier point d'éjection (7) pour les récoltes moissonnées est formé, **caractérisée en ce que** la goulotte d'éjection (6) a un second point d'éjection (12) pour les récoltes moissonnées, et **en ce que** la moissonneuse (1) comprend des moyens (14, 17; 18, 21, 22, 26, 28) pour faire passer un flux de récoltes moissonnées de l'un des points d'éjection (7, 12) à l'autre.

2. Moissonneuse selon la revendication 1, **caractérisée en ce qu'**il est disposé à chaque point d'éjection (7, 12) un moyen de déviation (8; 14, 17; 18) pour faire dévier vers le bas un flux de récoltes moissonnées passant à travers le point d'éjection (7, 12).

3. Moissonneuse selon la revendication 1 ou 2, **caractérisée en ce que** deux conduites adjacentes (24, 25) sont formées dans la goulotte d'éjection (6) dont une (24) débouche sur le premier point d'éjection (7) et dont l'autre (25) débouche sur le second point d'éjection (12).

4. Moissonneuse selon la revendication 3, **caractérisée en ce que** la goulotte d'éjection (6) est ajustable entre une position dans laquelle une sortie (29) de la carrosserie (2) débouche dans une conduite (24, 25) et une position dans laquelle elle débouche dans l'autre conduite (25, 24).

5. Moissonneuse selon la revendication 1 ou 2, **caractérisée en ce que** la goulotte d'éjection a un volet de distribution (27) pour appliquer le flux de récoltes moissonnées à l'un ou l'autre point d'éjection (7, 12).

6. Moissonneuse selon la revendication 2, **caractérisée en ce que** le second point d'éjection (12) est disposé entre une partie proximale (9) de la goulotte d'éjection (6) et une partie distale (11) de cette dernière, et le moyen de déviation (14, 17; 18) au second point d'éjection (12) est apte à être déplacé entre une position dans laquelle il fait dévier le flux de récoltes moissonnées vers le bas et une position dans laquelle il permet au flux de passer à travers pour aller dans la partie distale (11).

7. Moissonneuse selon la revendication 6, **caractérisée en ce que** le moyen de déviation comprend un volet (14) qui, à la seconde ouverture d'éjection, est pivotable vers l'intérieur dans l'intérieur de la goulotte d'éjection à partir d'un côté supérieur (16) de cette dernière.

8. Moissonneuse selon la revendication 6 ou 7, **caractérisée en ce que** la seconde ouverture d'éjection (12) est formée dans une surface de courbure concave de la goulotte d'éjection (6).

9. Moissonneuse selon la revendication 6, 7 ou 8, **caractérisée en ce que** les parties proximale et distale (9, 11; 31, 32) de la goulotte d'éjection (6) sont pivotablement connectées.

10. Moissonneuse selon la revendication 9, **caractérisée en ce que** la partie distale (11, 32) est pivotable entre une position dans laquelle elle allonge la partie proximale (9, 31) et une position dans laquelle elle est repliée contre la partie proximale (9, 31).

11. Moissonneuse selon l'une des revendications 6 à 10, **caractérisée en ce que** la partie distale (9) et le moyen de déviation (8) au second point d'éjection (12) sont aptes à être déplacés entre une position dans laquelle la partie distale (11) allonge la partie proximale et une position dans laquelle le moyen de déviation (8) au second point d'éjection (12) est opérant.
